Europäisches Patentamt

European Patent Office

Office européen des brevets

(19)

(11) Publication number: **0 416 648 A2**

# EUROPEAN PATENT APPLICATION

(21) Application number: **90117286.6**

(22) Date of filing: **07.09.90**

(51) Int. Cl.5: **C01G 49/06**

(30) Priority: **08.09.89 CS 5194/89**

(43) Date of publication of application:
**13.03.91 Bulletin 91/11**

(84) Designated Contracting States:
**AT BE CH DE DK ES FR GB GR IT LI LU NL SE**

(71) Applicant: **CESKOSLOVENSKA AKADEMIE VED**
**Narodni 3**
**Praha 1(CS)**

(72) Inventor: **Hanslik, Tomas**
**Ruská 90**
**Praha(CS)**

Inventor: **Nosek, Alois**
**Jasikova 1535**
**Praha(CS)**
Inventor: **Subrt, Jan**
**Frydlantská 1319**
**Praha(CS)**
Inventor: **Zapletal, Vladimir, DrSc**
**Cechova 5**
**Praha(CS)**

(74) Representative: **Patentanwälte Beetz sen. - Beetz jun. Timpe - Siegfried - Schmitt-Fumian- Mayr**
**Steinsdorfstrasse 10**
**W-8000 München 22(DE)**

(54) Method of micaceous iron oxide (mio) pigment production.

(57) This invention relates to a method for producing micaceous iron oxide ($\alpha$-$Fe_2O_3$) particles in the form of substantially hexagonal or circular platelets from insoluble iron(II) compounds comprising ferrous hydroxide, ferrous carbonate or ferrous ferrite and mixtures thereof. The compounds are oxidized at an elevated temperature in the range of 150 °C to 300 °C, in an aqueous solution of a concentrated alkali metal hydroxide of a concentration between 2 and 16 moles per liter, using gaseous oxygen as the sole oxidizing agent.

The product represents a valuable pigment, widely applied as a basic component in barrier anticorrosion coating materials.

Fig. 1

Fig. 2

EP 0 416 648 A2

## METHOD OF MICACEOUS IRON OXIDE (MIO) PIGMENT PRODUCTION

This invention relates to a method of producing micaceous iron oxide (MIO) (i. e. the lamellar modification of $\alpha$ -iron(III) oxide) particles in the form of substantially hexagonal or circular platelets. This crystal modification is widely employed for pigmenting barrier anti-corrosion coatings, that show extremely high resistance against combined environmental effects, namely where prolonged exposition to sunshine and water is involved.

Moreover, this invention relates to the oxidation of iron(II) compounds, thus providing an effective way of green copperas ($FeSO_4 \cdot 7H_2O$) and related waste products exploitation, by transforming them into the valuable pigment.

Up to now, micaceous iron oxide pigment has been produced through disintegration, grinding and classification of special iron ore - specularite - found in a limited number of deposits (e. g. Waldenstein, Austria). However, some synthetic routes have been known. The original method employs concentrated iron(II) sulphate, which is oxidized by an inorganic oxidizing agent (nitric acid, ammonium nitrate or sodium chlorate). The reaction mixture is then treated in concentrated sodium hydroxide solution (2 to 15 moles per liter) at a temperature in excess of 130 °C (GB-A-1 333 788). The second method (e. g. according to CS-A0 218 204) employs an oxide hydroxide or oxide of iron(III) to transform it, in a concentrated NaOH solution (2 - 20 moles per liter) at 150 °C - 350 °C, into the final product - MIO. This process avoids the presence of inorganic by-products in a reaction (i. e. pressure) vessel, thereby allowing full reaction medium recovery to be obtained. The third method, described in DE 30 19 404 employs a two-stage oxidation process for producing MIO pigment, carried out under similar conditions as described above. The first stage, the oxidation of an iron(II) compound, is made, using atmospheric oxygen, to give iron(II) ferrite ($Fe_3O_4$ or magnetite), while the second stage oxidation resulting in micaceous iron oxide should be carried out using an inorganic oxidizing agent, preferably sodium chlorate, in an inert atmosphere. The required intermediate,$Fe_3O_4$, can be obtained also by other ways, including reactions of iron(II) and iron(III) compounds or the reduction of iron(III) oxides by iron metal.

The reason of the application of the second oxidizing agent is based on the fact, that no oxidation of ferrous ferrite intermediate occurs with air oxygen under the reaction conditions commonly employed, i. e. a temperature between 200 °C and 250 °C, of a concentrated alkali hydroxide solution. This corresponds well to the present findings.

The other group of preparation/production methods consists in iron(III) chloride oxidation. According to the process, described in US-A-3 864 463, ferric chloride vapour is oxizided in an inert bed at a temperature between 400 °C and 750 °C, using oxygen gas, while the method of US-A-3 987 156 employs oxidation of molten potassium iron(III) tetrachloride ($KFeCl_4$) by oxygen at the temperature of 700 °C (approx.). The MPLC process (US-A-4 624 845) seems to be a modification of the latter, employing iron scrap as initial raw material. This is first chlorinated to give an iron(II) and iron(III) chloride mixture, which is immediately transformed into the mixture of sodium iron(II) trichloride and sodium iron(III) tetrachloride in a sodium chloride melt. In the second stage the iron chloride complexes are oxidized using gaseous oxygen at temperatures in excess of 700 °C. The chlorine gas released is recovered and used in a subsequent batch cycle. The final product, resembling natural specularite, should be isolated from NaCl melt, ground and classified to give MIO pigment.

The methods listed in the first group feature common disadvantages consisting in utilization of inorganic oxidizing agents that give troublesome waste by-products contaminating the reaction medium. The process employing pure iron oxides/oxide hydroxides transfers this problem into the initial material production only.

The methods of the second group are characterized by the use of highly corrosive acid gaseous materials as well as of high temperatures. These factors put considerable requirements on both the temperature and corrosion resistance of equipment, as well as on measures that should be applied for environmental protection. Moreover, the remarkable drawback of product isolation from salt medium and the requirement of grinding and classification of the final product cannot be neglected.

The above mentioned disadvantages can be avoided by the process according to the present invention.

Object of the present invention is a method of producing micaceous iron oxide (MIO) in the form of substantially hexagonal or circular platelets by oxidation of iron(II) compounds without the disadvantages of increased requirements on the corrosion resistance of the equipment and on measures for environmental protection and of working up the final product.

The present invention is based on the discovery, that the oxidation of iron(II) compounds resulting in micaceous iron oxide can be carried out in concentrated solutions of alkali metal hydroxides at elevated temperatures using oxygen gas as a sole oxidizing agent. The iron(II) compounds suitable as initial materials include preferably: iron(II) hydroxide, iron(II) carbonate, iron(II) ferrite (or $Fe_3O_4$), magnetite, their mixtures and corresponding mineral ores (e. g. siderite).

According to the present invention, such iron(II) compounds can be readily oxidized with gaseous oxygen, being suspended in the sodium hydroxide solution of a concentration between 2 and i6 moles per liter, into particulate micaceous iron oxide using a temperature between 150 °C and 300 °C, while the oxidation of ferrous ferrite ($Fe_3O_4$) intermediate has to be carried out at a temperature exceeding 250 °C. It was found that under the above conditions, even stoichiometric ferrous ferrite ($Fe_3O_4$) that resists to any oxidation with gaseous oxygen in concentrated NaOH solutions (6-16 M), can be readily oxidized into micaceous iron oxide, and, moreover, the reaction rate, closely related to product particle size, can be controlled by regulating the access (or pressure) of oxygen gas. Under oxygen shortage conditions the reaction ceases resulting in iron(II) ferrite (or magnetite), that represents the only stable insoluble intermediate of the whole process.

Compared to the existing methods of micaceous iron oxide production, the process according to the present invention shows at least the following apparent benefits:

a) It employs a single, gaseous oxidizing agent that can be consumed completely in the reaction mixture, producing no by-products.

b) Its reaction rate can be readily controlled by simple regulation of oxygen feed; this feature allows to control the product particle size to much larger extent as compared to any other hydrothermal method.

c) In contradistinction to an iron chloride complex oxidation, the method of the present invention produces particulate micaceous iron oxide, that can be readily used as a pigment, avoiding any mechanical treatment and classification.

According to the present invention the process is provided for efficient utilization of various kinds of iron(II) compounds wasted in large scale industrical processes, particularly iron(II) sulphate (green copperas) from titanium dioxide production, or used pickling liquors from rolled material treatment. Employing one of preferred embodiments of the present invention, a mixture of iron(II) sulphate and calcium hydroxide (lime) can be oxidized to give a readily separable mixture of micaceous iron oxide particles and calcium sulphate ones. This modification permits the used reaction medium (NaOH solution) to be recovered and recycled.

As to the quality of micaceous oxide produced, its average particle size can be readily varied employing combined effects of reaction temperature and oxygen pressure control in the whole size range, required for pigment applicaction, i. e. between 20 $\mu$m and 70 - 80 $\mu$m. The particles of MIO are substantially of hexagonal or, with some process modifications, circular shape, showing a diameter-to-thickness ratio of 10 or more. They show very good sedimentation and filtration properties and slight magnetism. After having been washed from alkaline reacting medium, they can be readily used as pigment, because of their narrow particle distribution (no fines) and high chemical purity (97 - 98 % $Fe_2O_3$).

The method of the present invention will be further illustrated below in detail referring to non-limitative examples and illustrations of microphotographs.

Fig. 1 shows the product of ferrous carbonate oxidation under the conditions of example 1.

Fig. 2 shows the product of ferrous hydroxide oxidation in a presence of calcium compounds, as described in example 3.

## Example 1

1120 g (4 moles) of green copperas ($FeSO_4 \cdot 7H_2O$) were dissolved in 2 l of water and mixed with the solution of 550 g sodium carbonate in 6 l of water at the temperature of approx. 60 °C. The precipitate of ferrous carbonate was then washed by decanting and filtering, and the final filtration cake was put into a solution of 880 g (22 moles) sodium hydroxide. The total volume of the mixture was made up to 2000 ml and the mixture was transferred into a rotational autoclave of 2500 ml volume. The autoclave was filled with oxygen (5 MPa) and heated up to reach the temperature of 150 °C. Then its temperature was kept within the range of 150 °C to 270 °C for the next 6 hours, the temperature of 260 - 270 °C being maintained for 2 hours in total.

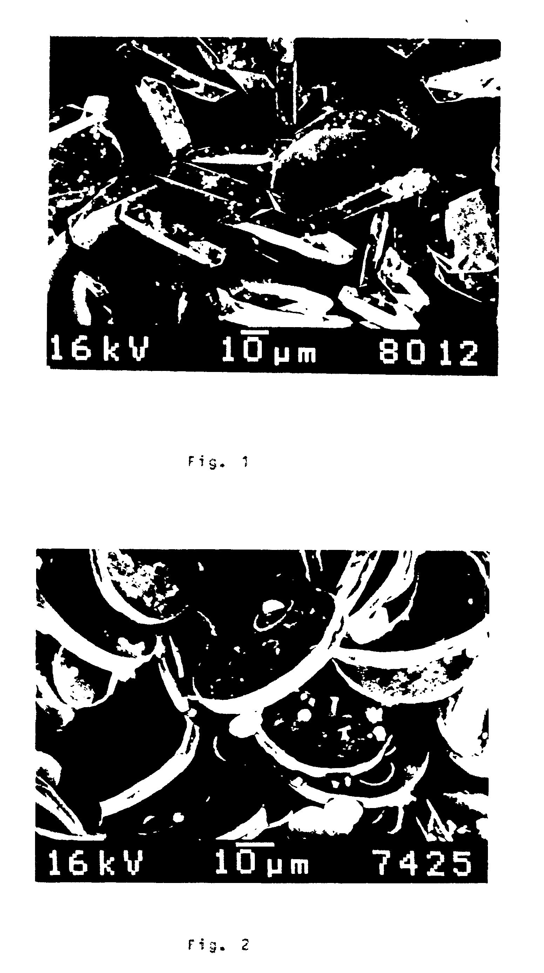

Then the autoclave was allowed to cool down and after relieving residual oxygen pressure it was opened. The product, consisting in 295 g particulate micaceous iron oxide of silver-gray colour, was composed of substantially hexagonal platelets, showing the size of 40 $\mu$m to 70 $\mu$m on SEM (see Fig. 1).

## Example 2

400 g of iron black of commercial quality (i. e. $Fe_3O_4$) were introduced into the same autoclave as in example 1 and 1500 ml of sodium hydroxide solution (10 moles per liter) were added. The free volume of autoclave was filled with oxygen up to the pressure of 1,1 MPa. Then the pressure vessel was heated up to the temperature of 260 °C, and a temperature in the range between 270 °C and 300 °C was maintained for 3 hours. Then it was allowed to cool at the rate of (approx.) 40 °C/hour down to 150 °C, removed from the furnace and, after additional cooling, opened. As a result, 402 grams of micaceous iron oxide of slightly violet shade were isolated, consisting in hexagonal platelets of 5 to 10 $\mu$m diameter.

## Example 3

560 g of green copperas were dissolved in 800 ml of water and 120 g calcium oxide were added under continuous stirring at a temperature of 60 - 70 °C. Then 660 g of sodium hydroxide were added and the total volume of the mixture was made up to 1.5 liters. The reaction mixture was introduced into the autoclave of example 1 and the initial oxygen pressure was adjusted to 1.2 MPa. The autoclave was then heated to 250 - 270 °C for 2 hours. The resulting mixture was filtered and the filtrate, i. e. sodium hydroxide solution, was stored for future use. The solid phase was separated into micaceous iron oxide and the waste, consisting substantially of gypsum, using controlled sedimentation. The yield of pure MIO, amounting to 145 g, was obtained. The product showed a particle size of 30 to 60 $\mu$m and a substantially circular platelet shape (see Fig. 2).

## Example 4

560 g of green copperas were dissolved in 1000 ml of water at a temperature between 60 and 70 °C and slowly added to a solution of ammonium hydroxide (6 moles of $NH_3$ in water, 6 liters). Ferrous hydroxide precipitated in this manner was filtered off and thoroughly washed with hot water to remove ammonium sulphate and excess ammonia. The washed cake was mixed with solid sodium hydroxide (440 g) and sodium carbonate (220 g) and the total volume of the mixture was adjusted to 1100 ml. The reaction mixture was introduced into the same autoclave as in example 1 and heated at the temperature of 260 °C ± 20 °C for 2 hours, under oxygen atmosphere of constant partial pressure (0.2 MPa). Then the vessel was cooled down to 100 °C and opened. The solid phase was separated by sedimentation from the hot reaction medium containing sodium hydroxide (10.5 moles per liter) and sodium carbonate (1.95 moles per liter), that was retained for future use. The solid product consisted in the MIO particles of average size of 50 to 60 $\mu$m.

## Example 5

A filtration cake, containing substantially ferrous carbonate and water, obtained from the reaction of 2 moles of ferrous chloride and 2.1 moles of sodium carbonate, was mixed with solid sodium hydroxide (200 g), and the total volume of reaction mixture was adjusted to 1500 ml (i. e. free NaOH concentration being 2 moles per liter). The mixture was introduced into the same autoclave as in example 1 and heated under oxygen atmosphere (2 MPa initial pressure) for 10 hours, the temperature being kept within the range of 260 to 285 °C. The resulting violet micaceous iron oxide (135 g) of average particle size of 5 $\mu$m was obtained.

## Example 6

The reaction mixture, obtained from the reaction of ferrous sulphate ($FeSO_4$, 1680 g/6 moles) with calcium oxide (400 g) was introduced into a stationary autoclave equipped with an anchor type stirrer, having the total volume of 5 l. Then 1320 g of sodium hydroxide were added, and the volume was adjusted with water to 3000 ml. The mixture was then heated up to the temperature of 250 °C under an oxygen atmosphere of 0.3 MPa constant pressure. Both the temperature and pressure conditions were kept for subsequent 3 hours, under continuous stirring. The resulting reaction mixture was then cooled down and processed in the same manner as in example 3, and finally, 445 grams of micaceous iron oxide, of 40 to 60 $\mu$m particle size, were obtained.

## Example 7

1120 g of green copperas were dissolved in water (1000 ml) at the temperature of 65 °C. The solution was then poured into 1280 g of solid sodium hydroxide, introduced in the autoclave as in example 1. The total mixture volume was adjusted to 1900 - 2000 ml and the vessel volume was closed. The free vessel volume was filled with oxygen, up to 2.5 MPa pressure. The system was then heated to 220 - 240 °C for 4 hours. After cooling, the vessel was opened, and a sample was withdrawn. By analysing the sample, ferrous ferrite ($Fe_3O_4$) was found as the only iron solid compound present. The vessel was again closed, refilled with oxygen (2.4 MPa) and heated to 250 - 280 °C for additional 2 hours. Then it was slowly cooled. As a result, 280 grams of micaceous iron oxide of 30 $\mu$m average particle size were obtained.

## Claims

1. A method for producing micaceous iron oxide particles by oxidizing an iron(II) compound with ferrous ferrite as an intermediate or a starting compound in an aqueous solution of an alkali metal hydroxide, comprising oxidizing said iron(II) compound into the resulting micaceous iron oxide using gaseous oxygen as the sole oxidizing agent.

2. A method according to claim 1, wherein the iron(II) compound comprises a water insoluble iron(II) compound selected from ferrous hydroxide, ferrous carbonate, ferrous ferrite and mixtures thereof.

3. A method according to claim 1 and 2, wherein the ferrous hydroxide is oxidized in a mixture, obtained from the reaction of ferrous sulphate with calcium oxide and/or calcium hydroxide.

4. A method according to claim 1, 2 or 3, wherein the reaction with gaseous oxygen is carried out at temperatures in the range between 150 °C and 300 °C, wherein the oxidation of ferrous ferrite is carried out at a temperature exceeding 250 °C, in the aqueous solution of sodium hydroxide of a concentration within the range between 8 and 12 moles NaOH per liter.

5. A method according to anyone of claims 1 to 4, wherein the size of the micaceous iron oxide particles is controlled by regulating the pressure of the gaseous oxygen.

6. Particulate micaceous iron oxide obtained by a method according to anyone of claims 1 to 5.

Fig. 1

Fig. 2